# EUROPEAN PATENT SPECIFICATION

(11) **EP 3 061 145 B1**
(45) Date of publication and mention of the grant of the patent: **12.12.2018**
(21) Application number: 14786918.4
(22) Date of filing: 21.10.2014
(51) Int. Cl.: H01M 4/62, H01M 10/052, H01M 4/04, H01M 4/13, H01M 4/139, H01M 4/38

(54) **POSITIVE ELECTRODES FOR LITHIUM-SULPHUR BATTERIES**
POSITIVE ELEKTRODEN FÜR LITHIUM-SCHWEFEL-BATTERIEN
ÉLECTRODE POSITIVE POUR BATTERIES AU LITHIUM-SOUFRE

(30) Priority: 23.10.2013 EP 13189897
(43) Date of publication of application: 31.08.2016
(73) Proprietor: Solvay SA, 1120 Bruxelles (BE)
(72) Inventor: DAMEN, Libero, I-20020 Cesate (MI) (IT); PETRICCI, Silvia Rita, I-20091 Bresso (MI) (IT); PIERI, Riccardo, I-20122 Milano (MI) (IT)
(74) Representative: Benvenuti, Federica
(86) International application number: PCT/EP2014/072572
(87) International publication number: WO 2015/059155

(56) References cited:
- WO-A1-2013/010936
- US-A1- 2003 073 000
- US-A1- 2003 073 005
- US-A1- 2004 029 014
- US-A1- 2010 304 270
- US-B1- 7 147 967

## Description

This application claims priority to European application No. 13189897.5 filed on October 23, 2013.

### Technical Field

The present invention relates to an electrode-forming composition suitable for use in a process for the manufacture of a positive electrode for a Lithium-Sulphur battery, to a process for the manufacture of said electrode-forming composition and to a process for the manufacture of said positive electrode for a Lithium-Sulphur battery.

### Background Art

The demand for secondary batteries having both a lighter weight and a higher capacity is continuously increasing due to the development on large scale of portable electronic devices.

Lithium-Sulphur batteries are expected to satisfy this demand due to the abundance and low cost of elemental Sulphur (S₈). Also, according to the complete reduction from elemental Sulphur to Lithium Sulphide (Li₂S), Sulphur is expected to deliver a specific capacity of 1675 Ah/Kg and an energy density of 2600 Wh/Kg, which are 3-5 folds higher than those of state-of-art Lithium-ion batteries.

Lithium-Sulphur batteries are secondary batteries including a positive electrode, said positive electrode containing an active material selected from elemental Sulphur (S₈), a Sulphur-based compound and mixtures thereof, an electrically conductive material and a binder, a negative electrode made of Lithium and an electrolyte.

Vinylidene fluoride (VDF)-based polymers are known in the art to be suitable for use as binders for the manufacture of positive electrodes for use in Lithium-Sulphur batteries.

Generally, techniques for manufacturing such electrodes involve the use of organic solvents such as N-methyl-2-pyrrolidone (NMP) for dissolving VDF-based polymer binders and homogenizing them with a powdery electrode material and all other suitable components to produce a paste to be applied to a metal collector.

The role of the organic solvent is typically to dissolve the VDF-based polymer in order to bind the powdery electrode material particles to each together and to the metal collector upon evaporation of the organic solvent.

It is understood that the polymer binder should properly bind the electrode material particles together and to the metal collector so that these particles chemically withstand large volume expansion and contraction during charging and discharging cycles.

A poor cohesion within the powdery electrode material particles and an insufficient adhesion of these particles to the metal collector are typically responsible for high electrical resistance, low capacity and low ion mobility within the electrode.

Nevertheless, the use of NMP is attracting more and more concerns, having regards to the safety risks associated to its handling and to possible leakage/emissions in the environment. NMP has been notably classified according to the European regulation (EC) No1272/2008 in the hazard class Repr.1B code H360D (may damage the unburned child), Eye Irrit.2 code H319, STOT SE 3 code H335, Skin Irrit.2 H315 and according to the European directive 67/548/EEC it is classified as Reprotoxic Cat2 code R61, Xi codes R36/37/38. Furthermore, it is submitted to the Toxic Release Inventory (SARA Title III Section 313).

For instance, US 2010/0304270 (ARKEMA INC.) 02.12.2010 discloses a process for the manufacture of either positive or negative electrodes suitable for use in non-aqueous-type batteries, said process comprising using a VDF-based polymer as binder in the form of an aqueous VDF-based polymer latex.

Further, elemental Sulphur sublimes at relatively low temperatures so that during drying of the electrodes at temperatures above room temperature, especially when operating under vacuum, there is often a loss of the Sulphur content in the electrode thereby provided leading to lower capacity values of the Lithium-Sulphur battery so obtained.

There is thus still a need in the art for polymer binder compositions which advantageously enable manufacturing positive electrodes suitable for use in Lithium-Sulphur batteries by means of an environmentally-friendly process and for positive electrodes suitable for use in Lithium-Sulphur batteries having good adhesion and cohesion within the powdery electrode material particles and to the metal collector to provide for Lithium-Sulphur batteries endowed with outstanding capacity values.

### Summary of invention

It has been now found that the electrode-forming composition of the present invention advantageously enables manufacturing at relatively low temperatures positive electrodes particularly suitable for use in Lithium-Sulphur batteries.

Also, it has been found that the process of the invention can be advantageously carried out in environmentally friendly waterborne media without the need for redispersing or solubilising polymer powders in liquid media such as toxic and polluting organic solvents.

The Applicant has also found that the electrode-forming composition of the present invention is successfully stable and its components are advantageously homogeneously dispersed therein in the long term.

It has been thus found that the electrode-forming composition of the invention successfully provides for positive electrodes particularly suitable for use in Lithium-Sulphur batteries having outstanding capacity values during charging and discharging cycles.

In a first instance, the present invention pertains to an electrode-forming composition [composition (C)] comprising:
(a) an aqueous latex comprising at least one fluoropolymer comprising recurring units derived from vinylidene fluoride (VDF) and, optionally, at least one other monomer different from VDF [polymer (F)], and, homogeneously dispersed therein,
(b) at least one powdery electrode-forming material consisting of Sulphur [material (E)],
(c) at least one powdery electrically conducting material [material (C)],
(d) optionally, at least one surfactant [surfactant (S)],
(e) optionally, at least one binding agent [agent (B)], and
(f) optionally, less than 10% by weight, based on the total weight of the composition (C), of at least one organic solvent [solvent (S)],
wherein the polymer (F) in the aqueous latex is under the form of primary particles having an average primary particle size of less than 1 µm, as measured according to ISO 13321.

In a second instance, the present invention pertains to a process for the manufacture of an electrode-forming composition [composition (C)], said process comprising the following steps:
(i-1) providing an aqueous latex comprising at least one fluoropolymer comprising recurring units derived from vinylidene fluoride (VDF) and, optionally, at least one other monomer different from VDF [polymer (F)], wherein the polymer (F) in the aqueous latex is under the form of primary particles having an average primary particle size of less than 1 µm, as measured according to ISO 13321;
(ii-1) providing a mixture comprising:
   - at least one powdery electrode-forming material consisting of Sulphur [material (E)], and
   - at least one powdery electrically conducting material [material (C)];
(iii-1) grinding the mixture provided in step (ii-1),
(iv-1) contacting the aqueous latex provided in step (i-1) with the following components:
   - the grinded mixture provided in step (iii-1),
   - optionally, at least one surfactant [surfactant (S)],
   - optionally, at least one binding agent [agent (B)], and
   - optionally, less than 10% by weight, based on the total weight of the composition (C), of at least one organic solvent [solvent (S)].

The composition (C) of the present invention is advantageously obtainable by the process of the present invention.

In a third instance, the present invention pertains to use of said composition (C) in a process for the manufacture of a positive electrode for a Lithium-Sulphur battery.

Thus, the present invention also pertains to a process for the manufacture of a positive electrode for a Lithium-Sulphur battery, said process comprising the following steps:
(i-2) providing a composition (C) as defined above,
(ii-2) providing a metal substrate,
(iii-2) applying said composition (C) onto at least one surface of said metal substrate thereby providing an assembly comprising at least one layer made of said composition (C) adhered onto at least one surface of said metal substrate,
(iv-2) optionally, post-treating the assembly provided in step (iii-2), and
(v-2) drying the assembly provided in either step (iii-2) or (iv-2).

The positive electrode thereby provided is particularly suitable for use in a Lithium-Sulphur battery.

Thus, in a fourth instance, the present invention pertains to use of the positive electrode obtainable by the process of the invention in a Lithium-Sulphur battery.

The composition (C) preferably comprises:
(a) an aqueous latex comprising at least one fluoropolymer comprising recurring units derived from vinylidene fluoride (VDF) and, optionally, at least one other monomer different from VDF [polymer (F)], and, homogeneously dispersed therein,
(b) at least one powdery electrode-forming material consisting of Sulphur [material (E)],
(c) at least one powdery electrically conducting material [material (C)],
(d) at least one surfactant [surfactant (S)], and
(e) optionally, at least one binding agent [agent (B)],
wherein the polymer (F) in the aqueous latex is under the form of primary particles having an average primary particle size of less than 1 µm, as measured according to ISO 13321.

The composition (C) more preferably comprises:
(a) from 1% to 20% by weight, preferably from 3% to 15% by weight of an aqueous latex comprising at least one fluoropolymer comprising recurring units derived from vinylidene fluoride (VDF) and, optionally, at least one other monomer different from VDF [polymer (F)], and, homogeneously dispersed therein,
(b) from 40% to 95% by weight, preferably from 60% to 90% by weight of at least one powdery electrode-forming material consisting of Sulphur [material (E)],
(c) from 3% to 60% by weight, preferably from 5% to 40% by weight of at least one powdery electrically conducting material [material (C)],
(d) from 0.1% to 20% by weight, preferably from 0.2% to 10% by weight of at least one surfactant [surfactant (S)], and
(e) optionally, from 0.1% to 20% by weight, preferably from 0.2% to 10% by weight of at least one binding agent [agent (B)],
wherein the polymer (F) in the aqueous latex is under the form of primary particles having an average primary particle size of less than 1 µm, as measured according to ISO 13321.

The aqueous latex of the composition (C) is typically obtainable by aqueous emulsion polymerization, typically in an aqueous medium, of vinylidene fluoride (VDF) and, optionally, at least one other monomer different from VDF.

The aqueous emulsion polymerization is typically carried out in the presence of:
- at least one surfactant [surfactant (S)],
- at least one radical initiator,
- optionally, at least one non-functional perfluoropolyether (PFPE) oil, and
- optionally, at least one chain transfer agent.

The surfactant (S) may otherwise be added to the aqueous latex resulting from said aqueous emulsion polymerization subsequently to said polymerization by contacting said aqueous latex with said surfactant (S).

For the purpose of the present invention, by "surfactant [surfactant (S)]" it is intended to denote an amphiphilic organic compound containing both hydrophobic groups and hydrophilic groups.

The surfactant (S) is typically selected from the group consisting of:
- hydrogenated surfactants [surfactants (H)],
- fluorinated surfactants [surfactants (F)], and
- mixtures thereof.

The surfactant (H) may be a ionic hydrogenated surfactant [surfactant (IS)] or a non-ionic hydrogenated surfactant [surfactant (NS)].

Non-limitative examples of suitable surfactants (IS) include, notably, 3-allyloxy-2-hydroxy-1-propane sulfonic acid salts, polyvinylphosphonic acid salts, polyacrylic acid salts, polyvinyl sulfonic acid salts and alkyl phosphonates.

The surfactant (H) is preferably a surfactant (NS).

Non-limitative examples of suitable surfactants (NS) include, notably, octylphenol ethoxylates and fatty alcohol polyethers comprising recurring units derived from ethylene oxide and/or propylene oxide.

The surfactant (NS) has generally a cloud point of advantageously 50°C or more, preferably of 55°C or more, as measured according to EN 1890 standard (method A: 1% by weight water solution).

The surfactant (NS) is preferably selected from the group consisting of non-ionic hydrogenated surfactants commercially available under the trademark names TRIXON® X and PLURONIC®.

The surfactant (F) preferably complies with formula (I) here below:

R_{f§}(X⁻)ₖ(M⁺)ₖ (I)

wherein:
- R_{f§} is selected from a C₄-C₁₆ (per)fluoroalkyl chain, optionally comprising one or more catenary or non-catenary oxygen atoms, and a (per)fluoropolyoxyalkyl chain,
- X⁻ is selected from -COO⁻ , -PO₃⁻ and -SO₃⁻,
- M⁺ is selected from NH₄⁺ and an alkaline metal ion, and
- k is 1 or 2.

Non-limitative examples of surfactants (F) suitable for the aqueous emulsion polymerization process include, notably, the followings:
(a') CF₃(CF₂)ₙ₀COOM', wherein n₀ is an integer ranging from 4 to 10, preferably from 5 to 7, preferably n₀ being equal to 6, and M' represents NH₄, Na, Li or K, preferably NH₄;
(b') T-(C₃F₆O)ₙ₁(CFYO)ₘ₁CF₂COOM", wherein T represents a CI atom or a perfluoroalkoxyde group of formula CₓF_{2x+1-x'}Cl_{x'}O, wherein x is an integer ranging from 1 to 3 and x' is 0 or 1, n₁ is an integer ranging from 1 to 6, m₁ is 0 or an integer ranging from 1 to 6, M" represents NH₄, Na, Li or K and Y represents F or -CF₃;
(c') F-(CF₂CF₂)ₙ₂-CH₂-CH₂-X*O₃M"', wherein X* is a phosphorus or a sulphur atom, preferably X* being a sulphur atom, M'" represents NH₄, Na, Li or K and n₂ is an integer ranging from 2 to 5, preferably n₂ being equal to 3;
(d') A-R_{bf}-B bifunctional fluorinated surfactants, wherein A and B, equal to or different from each other, have formula -(O)ₚCFY"-COOM*, wherein M* represents NH₄, Na, Li or K, preferably M* representing NH₄, Y" is F or -CF₃ and p is 0 or 1, and R_{bf} is a divalent (per)fluoroalkyl chain or (per)fluoropolyether chain such that the number average molecular weight of A-R_{bf}-B is in the range of from 300 to 1800; and
(e') mixtures thereof.

The surfactant (F) preferably complies with formula (b') as defined above.

The aqueous latex obtainable by aqueous emulsion polymerization advantageously comprises at least one polymer (F) preferably under the form of primary particles having an average primary particle size comprised between 50 nm and 450 nm, preferably between 250 nm and 300 nm, as measured according to ISO 13321.

For the purpose of the present invention, by "average primary particle size" it is intended to denote the average size of primary particles of polymer (F) obtainable by aqueous emulsion polymerization.

For the purpose of the present invention, "primary particles" of polymer (F) are to be intended distinguishable from agglomerates of primary particles. Aqueous latexes comprising primary particles of polymer (F) are advantageously obtainable by aqueous emulsion polymerization. Agglomerates of primary particles of polymer (F) are typically obtainable by recovery and conditioning steps of polymer (F) manufacture such as concentration and/or coagulation of aqueous polymer (F) latexes and subsequent drying and homogenization thereby providing polymer (F) powders.

The aqueous latex obtainable by aqueous emulsion polymerization is thus to be intended distinguishable from an aqueous slurry prepared by dispersing polymer (F) powders in an aqueous medium. The average particle size of polymer (F) powders dispersed in an aqueous slurry is typically higher than 1 µm, as measured according to ISO 13321.

The aqueous latex obtainable by aqueous emulsion polymerization advantageously has homogeneously dispersed therein primary particles of at least one polymer (F) having an average primary particle size comprised between 50 nm and 450 nm, preferably between 250 nm and 300 nm, as measured according to ISO 13321.

The aqueous emulsion polymerization is typically carried out at a pressure comprised between 20 bar and 70 bar, preferably between 25 bar and 65 bar.

The skilled in the art will choose the polymerization temperature having regards, *inter alia*, of the radical initiator used. The aqueous emulsion polymerization temperature is typically carried out at a temperature comprised between 60°C and 135°C, preferably between 90°C and 130°C.

While the choice of the radical initiator is not particularly limited, it is understood that water-soluble radical initiators suitable for aqueous emulsion polymerization are selected from compounds capable of initiating and/or accelerating the polymerization process.

Inorganic radical initiators may be used and include, but are not limited to, persulfates such as sodium, potassium and ammonium persulfates, permanganates such as potassium permanganate.

Also, organic radical initiators may be used and include, but are not limited to, the followings: acetylcyclohexanesulfonyl peroxide; diacetylperoxydicarbonate; dialkylperoxydicarbonates such as diethylperoxydicarbonate, dicyclohexylperoxydicarbonate, di-2-ethylhexylperoxydicarbonate; tert-butylperneodecanoate; 2,2'-azobis(4-methoxy-2,4-dimethylvaleronitrile; tert-butylperpivalate; dioctanoylperoxide; dilauroyl-peroxide; 2,2'-azobis (2,4-dimethylvaleronitrile); tert-butylazo-2-cyanobutane; dibenzoylperoxide; tert-butyl-per-2ethylhexanoate; tert-butylpermaleate; 2,2'-azobis(isobutyronitrile); bis(tert-butylperoxy)cyclohexane; tert-butylperoxyisopropylcarbonate; tert-butylperacetate; 2,2'-bis (tert-butylperoxy)butane; dicumyl peroxide; di-tert-amyl peroxide; di-tert-butyl peroxide (DTBP); p-methane hydroperoxide; pinane hydroperoxide; cumene hydroperoxide; and tert-butyl hydroperoxide.

Other suitable radical initiators notably include halogenated free radical initiators such as chlorocarbon based and fluorocarbon based acyl peroxides such as trichloroacetyl peroxide, bis(perfluoro-2-propoxy propionyl) peroxide, [CF₃CF₂CF₂OCF(CF₃)COO]₂, perfluoropropionyl peroxides, (CF₃CF₂CF₂COO)₂, (CF₃CF₂COO)₂, {(CF₃CF₂CF₂)-[CF(CF₃ )CF₂O]ₘ-CF(CF₃)-COO}₂ where m= 0-8, [ClCF₂(CF₂)ₙCOO]₂, and [HCF₂ (CF₂)ₙCOO]₂ where n= 0-8; perfluoroalkyl azo compounds such as perfluoroazoisopropane, [(CF₃)₂CFN=]₂, R^{¤}N=NR^{¤}, where R^{¤} is a linear or branched perfluorocarbon group having 1-8 carbons; stable or hindered perfluoroalkane radicals such as hexafluoropropylene trimer radical, [(CF₃) ₂CF]₂(CF₂CF₂)C^{●} radical and perfluoroalkanes.

Redox systems, comprising at least two components forming a redox couple, such as dimethylaniline-benzoyl peroxide, diethylaniline-benzoyl peroxide and diphenylamine-benzoyl peroxide may also be used as radical initiators to initiate the polymerization process.

Among inorganic radical initiators, ammonium persulfate is particularly preferred.

Among organic radical initiators, the peroxides having a self-accelerating decomposition temperature (SADT) higher than 50°C are particularly preferred, such as for instance: di-tert-butyl peroxide (DTBP), diterbutylperoxyisopropylcarbonate, terbutyl(2-ethyl-hexyl)peroxycarbonate, terbutylperoxy-3,5,5-trimethylhexanoate.

One or more radical initiators as defined above may be added to the aqueous medium of the aqueous emulsion polymerization process in an amount ranging advantageously from 0.001% to 20% by weight based on the weight of the aqueous medium.

By "non-functional perfluoropolyether (PFPE) oil" it is hereby intended to denote a perfluoropolyether (PFPE) oil comprising a (per)fluoropolyoxyalkylene chain [chain (R_{f})] and non-functional end-groups.

The non-functional end groups of the non-functional PFPE oil are generally selected from fluoro(halo)alkyl groups having 1 to 3 carbon atoms, optionally comprising one or more halogen atoms different from fluorine or hydrogen atoms, e.g. CF₃-, C₂F₅-, C₃F₆-, ClCF₂CF(CF₃)-, CF₃ CFClCF₂-, ClCF₂CF₂-, ClCF₂-.

The non-functional PFPE oil has a number average molecular weight advantageously comprised between 400 and 3000, preferably between 600 and 1500.

The non-functional PFPE oil is more preferably selected from the group consisting of:
(1') non-functional PFPE oils commercially available from Solvay Solexis S.p.A. under the trademark names GALDEN® and FOMBLIN®, said PFPE oils generally comprising at least one PFPE oil complying with either of formulae here below:

   CF₃-[(OCF₂CF₂)ₘ-(OCF₂)ₙ]-OCF₃

   m+n = 40 -180; m/n = 0.5 - 2

   CF₃-[(OCF(CF₃)CF₂)ₚ-(OCF₂)_{q}]-OCF₃

   p+q = 8 - 45; p/q = 20 - 1000
(2') non-functional PFPE oils commercially available from Daikin under the trademark name DEMNUM®, said PFPEs generally comprising at least one PFPE complying with formula here below:

   F-(CF₂CF₂CF₂O)ₙ-(CF₂CF₂CH₂O)ⱼ-CF₂CF₃

   j = 0 or integer > 0; n+j = 10 - 150
(3') non-functional PFPE oils commercially available from Du Pont de Nemours under the trademark name KRYTOX®, said PFPEs generally comprising at least one low-molecular weight, fluorine end-capped, homopolymer of hexafluoropropylene epoxide complying with formula here below:

   F-(CF(CF₃)CF₂O)ₙ-CF₂CF₃

   n = 10 - 60

The non-functional PFPE oil is even more preferably selected from those having formula (1') as described above.

The aqueous emulsion polymerization as detailed above is typically carried out in the presence of a chain transfer agent.

The chain transfer agent is generally selected from those known in the polymerization of fluorinated monomers such as ketones, esters, ethers or aliphatic alcohols having from 3 to 10 carbon atoms like, e.g., acetone, ethylacetate, diethylether, methyl-ter-butyl ether, isopropyl alcohol; chloro(fluoro)carbons, optionally containing hydrogen, having from 1 to 6 carbon atoms, like, e.g., chloroform, trichlorofluoromethane; bis(alkyl)carbonates wherein the alkyl has from 1 to 5 carbon atoms like, e.g., bis(ethyl)carbonate, bis(isobutyl)carbonate. The chain transfer agent may be fed to the aqueous medium at the beginning, continuously or in discrete amounts (step-wise) during the polymerization, continuous or stepwise feeding being preferred.

Aqueous emulsion polymerization processes as detailed above have been described in the art (see e.g. US 4990283 (AUSIMONT S.P.A.) 05.02.1991 , US 5498680 (AUSIMONT S.P.A.) 12.03.1996 and US 6103843 (AUSIMONT S.P.A.) 15.08.2000).

The aqueous latex preferably comprises from 20% and 30% by weight of at least one polymer (F).

The aqueous latex may be up-concentrated according to any techniques known in the art.

The polymer (F) may further comprise recurring units derived from at least one other monomer different from vinylidene fluoride (VDF).

The monomer may be either a fluorinated monomer [monomer (F)] or a hydrogenated monomer [monomer (H)].

By the term "fluorinated monomer [monomer (F)]" it is hereby intended to denote an ethylenically unsaturated monomer comprising at least one fluorine atom.

By the term "hydrogenated monomer [monomer (H)]" it is hereby intended to denote an ethylenically unsaturated monomer comprising at least one hydrogen atom and free from fluorine atoms.

The polymer (F) typically further comprises recurring units derived from at least one fluorinated monomer [monomer (F)] different from vinylidene fluoride (VDF).

The polymer (F) typically further comprises recurring units derived from at least one hydrogenated monomer [monomer (H)].

The term "at least one fluorinated monomer [monomer (F)]" is understood to mean that the polymer (F) may comprise recurring units derived from one or more than one fluorinated monomers. In the rest of the text, the expression "fluorinated monomers" is understood, for the purposes of the present invention, both in the plural and the singular, that is to say that they denote both one or more than one fluorinated monomers as defined above.

The term "at least one hydrogenated monomer [monomer (H)]" is understood to mean that the polymer (F) may comprise recurring units derived from one or more than one hydrogenated monomers. In the rest of the text, the expression "hydrogenated monomers" is understood, for the purposes of the present invention, both in the plural and the singular, that is to say that they denote both one or more than one hydrogenated monomers as defined above.

The polymer (F) comprises typically at least 50% by moles, preferably at least 70% by moles, preferably at least 75% by moles of recurring units derived from vinylidene fluoride (VDF).

Non limitative examples of suitable monomers (F) include, notably, the followings:
- C₃-C₈ perfluoroolefins, such as tetrafluoroethylene and hexafluoropropene;
- C₂-C₈ hydrogenated fluoroolefins, such as vinyl fluoride, 1,2-difluoroethylene and trifluoroethylene;
- perfluoroalkylethylenes complying with formula CH₂=CH-R_{f0} wherein R_{f0} is a C₁-C₆ perfluoroalkyl;
- chloro- and/or bromo- and/or iodo-C₂-C₆ fluoroolefins, such as chlorotrifluoroethylene;
- (per)fluoroalkylvinylethers complying with formula CF₂=CFOR_{f1} wherein R_{f1} is a C₁-C₆ fluoro- or perfluoroalkyl, e.g. CF₃, C₂F₅, C₃F₇ ;
- CF₂=CFOX₀ (per)fluoro-oxyalkylvinylethers wherein X₀ is a C₁-C₁₂ alkyl group, a C₁-C₁₂ oxyalkyl group or a C₁-C₁₂ (per)fluorooxyalkyl group having one or more ether groups, such as perfluoro-2-propoxy-propyl group;
- (per)fluoroalkylvinylethers complying with formula CF₂=CFOCF₂OR_{f2} wherein R_{f2} is a C₁-C₆ fluoro- or perfluoroalkyl group, e.g. CF₃, C₂F₅, C₃F ₇ or a C₁-C₆ (per)fluorooxyalkyl group having one or more ether groups, such as -C₂F₅-O-CF₃;
- functional (per)fluoro-oxyalkylvinylethers complying with formula CF₂ =CFOY₀ wherein Y₀ is a C₁-C₁₂ alkyl group or (per)fluoroalkyl group, a C₁
- C₁₂ oxyalkyl group or a C₁-C₁₂ (per)fluorooxyalkyl group having one or more ether groups and Y₀ comprising a carboxylic or sulfonic acid group, in its acid, acid halide or salt form;
- fluorodioxoles, especially perfluorodioxoles.

Non limitative examples of suitable monomers (H) include, notably, ethylene, propylene and isobutylene, (meth)acrylic monomers [monomers (MA)] and styrene monomers such as styrene and p-methylstyrene.

The (meth)acrylic monomer [monomer (MA)] typically complies with formula (II) here below: 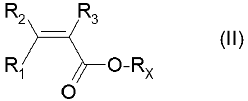 wherein:
- R₁, R₂ and R₃, equal to or different from each other, are independently selected from a hydrogen atom and a C₁-C₃ hydrocarbon group, and
- R_{X} is a hydrogen atom or a C₁-C₅ hydrocarbon moiety comprising at least one hydroxyl group.

The polymer (F) typically further comprises at least 0.01% by moles, preferably at least 0.02% by moles, more preferably at least 0.03% by moles of recurring units derived from at least one monomer (MA) having formula (II) as defined above.

The polymer (F) typically further comprises at most 10% by moles, preferably at most 5% by moles, more preferably at most 2% by moles of recurring units derived from at least one monomer (MA) having formula (II) as defined above.

Determination of average mole percentage of monomer (MA) recurring units in polymer (F) can be performed by any suitable method. Mention can be notably made of acid-base titration methods, well suited e.g. for the determination of the acrylic acid content, of NMR methods, adequate for the quantification of monomers (MA) comprising aliphatic hydrogen atoms in side chains, of weight balance based on total fed monomer (MA) and unreacted residual monomer (MA) during polymer (F) manufacture.

The monomer (MA) preferably complies with formula (III) here below: 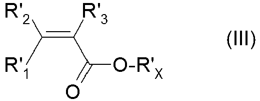 wherein R'₁, R'₂ and R'₃ are hydrogen atoms and R'_{X} is a hydrogen atom or a C₁-C₅ hydrocarbon moiety comprising at least one hydroxyl group.

Non limitative examples of monomers (MA) include, notably, acrylic acid, methacrylic acid, hydroxyethyl(meth)acrylate, hydroxypropyl(meth)acrylate, hydroxyethylhexyl(meth)acrylate.

The monomer (MA) is even more preferably selected from the followings:
- hydroxyethyl acrylate (HEA) of formula: 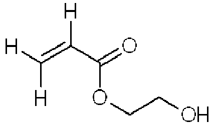
- 2-hydroxypropyl acrylate (HPA) of either of formulae: 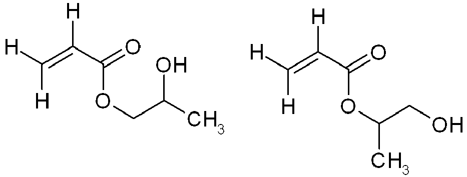
- acrylic acid (AA) of formula: 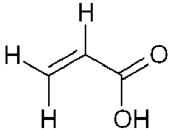
- and mixtures thereof.

The polymer (F) may be amorphous or semi-crystalline.

The term "amorphous" is hereby intended to denote a polymer (F) having a heat of fusion of less than 5 J/g, preferably of less than 3 J/g, more preferably of less than 2 J/g, as measured according to ASTM D-3418-08.

The term "semi-crystalline" is hereby intended to denote a polymer (F) having a heat of fusion of from 10 to 90 J/g, preferably of from 30 to 60 J/g, more preferably of from 35 to 55 J/g, as measured according to ASTM D3418-08.

The polymer (F) is preferably semi-crystalline.

The polymer (F) is preferably a polymer (F-1) comprising recurring units derived from vinylidene fluoride (VDF), at least one monomer (MA) as defined above, and, optionally, at least one other monomer (F) different from VDF.

The polymer (F-1) preferably comprises:
(a') at least 60% by moles, preferably at least 75% by moles, more preferably at least 85% by moles of vinylidene fluoride (VDF);
(b') optionally, from 0.1% to 15% by moles, preferably from 0.1% to 12% by moles, more preferably from 0.1% to 10% by moles of at least one monomer (F) selected from vinylfluoride (VF₁), chlorotrifluoroethylene (CTFE), hexafluoropropene (HFP), tetrafluoroethylene (TFE), trifluoroethylene (TrFE), perfluoromethylvinylether (PMVE); and
(c') from 0.01% to 20% by moles, preferably from 0.05% to 18% by moles, more preferably from 0.1% to 10% by moles of at least one monomer (MA) of formula (I) as defined above.

It has been found that, by using an aqueous latex comprising at least one polymer (F-1) as defined above, wherein the polymer (F-1) is under the form of primary particles having an average primary particle size of less than 1 µm, as measured according to ISO 13321, the composition (C) thereby provided advantageously exhibits enhanced adhesion properties to a metal substrate during the process for the manufacture of a positive electrode for a Lithium-Sulphur battery.

For the purpose of the present invention, by "powdery electrode-forming material [material (E)]" it is intended to denote a non-electrically conducting particulate material which is able to be reduced and oxidised during battery charge/discharge cycles.

The material (E) typically consists of elemental Sulphur.

The material (E) is preferably selected from the group consisting of cyclic octasulphur (S₈) and its cyclic S₁₂ allotrope.

The material (E) typically distinguishes from colloidal Sulphur powder in that said colloidal Sulphur powder is usually recovered from an aqueous suspension of elemental Sulphur in a gum base.

For the purpose of the present invention, by "powdery electrically conducting material [material (C)]" it is intended to denote an electrically conducting particulate material.

The material (C) is preferably selected from the group consisting of:
- carbon-based materials such as carbon, carbon black, acetylene black and furnace black,
- metal powders of Ni, Co, Cu, Pt, Ag, Au and alloys thereof, and
- polymers selected from the group consisting of polyaniline, polythiophene, polyacetylene, polypyrrole and mixtures thereof.

For the purpose of the present invention, by "organic solvent [solvent (S)]" it is intended to denote an organic liquid medium. By the term "liquid" it is meant a substance in its liquid state at 20°C under atmospheric pressure.

Non-limitative examples of suitable solvents (S) include, notably, the followings:
- aliphatic, cycloaliphatic or aromatic ether oxides, more particularly, diethyl oxide, dipropyl oxide, diisopropyl oxide, dibutyl oxide, methyltertiobutylether, dipentyl oxide, diisopentyl oxide, ethylene glycol dimethyl ether, ethylene glycol diethyl ether, ethylene glycol dibutyl ether benzyl oxide; dioxane, tetrahydrofuran (THF);
- glycol ethers such as ethylene glycol monomethyl ether, ethylene glycol monoethyl ether, ethylene glycol monopropyl ether, ethylene glycol monoisopropyl ether, ethylene glycol monobutyl ether, ethylene glycol monophenyl ether, ethylene glycol monobenzyl ether, diethylene glycol monomethyl ether, diethylene glycol monoethyl ether, diethylene glycol mono-n-butyl ether;
- glycol ether esters such as ethylene glycol methyl ether acetate, ethylene glycol monoethyl ether acetate, ethylene glycol monobutyl ether acetate;
- alcohols such as methyl alcohol, ethyl alcohol, diacetone alcohol;
- ketones such as acetone, methylethylketone, methylisobutyl ketone, diisobutylketone, cyclohexanone, isophorone;
- linear or cyclic esters such as isopropyl acetate, n-butyl acetate, methyl acetoacetate, dimethyl phthalate, g-butyrolactone;
- linear or cyclic amides such as N,N-diethylacetamide, N,N-dimethylacetamide (DMAC), N,N-dimethylformamide (DMF) and N-methyl-2-pyrrolidone (NMP);
- phosphoric esters such as trimethyl phosphate and triethyl phosphate;
- dimethyl sulfoxide (DMSO); and
- organic carbonates selected from the group consisting of organic carbonates of formula (R_{B})CO₃(R_{A}), wherein R_{A} and R_{B}, equal to or different from each other, represent a linear or branched C₁-C₄ alkyl group, such as methyl carbonate, ethyl carbonate, n-propyl carbonate, sec-propyl carbonate, n-butyl carbonate, t-butyl carbonate, methyl-ethyl carbonate, methyl propyl carbonate, ethyl-propyl carbonate, methyl-butyl carbonate, and ethyl-butyl carbonate; ethylene carbonate (CAS# 96-49-1) having a melting point of 35-38°C; propylene carbonate (CAS# 108-32-7) having boiling point of 240°C; butylene carbonate isomers; and vinylene carbonate.

The composition (C) is preferably free from any solvent (S), more preferably free from any solvent (S) qualified as Carcinogenic, Mutagenic or Toxic to Reproduction according to chemical safety classification (CMR solvents). The composition (C) is even more preferably free from N-methyl-2-pyrrolidone (NMP), N,N-dimethylformamide (DMF) and N,N-dimethylacetamide (DMAC).

The agent (B) is typically selected from the group consisting of carboxymethyl cellulose (CMC), polyethylene oxide, polytetrafluoroethylene and polyacrylonitrile.

Should the composition (C) comprise at least one binding agent [agent (B)], the composition (C) preferably comprises carboxymethyl cellulose (CMC), typically in an amount comprised between 0.2% and 10% by weight.

Under step (iii-1) of the process for the manufacture of a composition (C), the grinding can be carried out by any suitable techniques such as by using a ball mill, an impeller mill or other suitable devices.

The skilled in the art will properly select the time of grinding so as to provide the desired particle size.

Under step (iv-1) of the process for the manufacture of a composition (C), the aqueous latex provided in step (i-1) is typically admixed, preferably under stirring, with the other components.

The skilled in the art will properly adapt the viscosity of the composition (C) so as to enable obtaining a uniform distribution of said components within said aqueous latex.

Under step (ii-2) of the process for the manufacture of a positive electrode for a Lithium-Sulphur battery, the metal substrate is typically a foil made of a metal selected from the group consisting of aluminium, copper, nickel, gold.

Under step (iii-2) of the process for the manufacture of a positive electrode for a Lithium-Sulphur battery, the composition (C) is applied onto at least one surface of the metal substrate typically by any deposition techniques commonly known in the art.

Non-limitative examples of suitable deposition techniques include, notably, casting, doctor blade, spray coating, brush, roller, screen printing, ink-jet printing techniques.

Under step (iv-2) of the process for the manufacture of a positive electrode for a Lithium-Sulphur battery, if any, the assembly provided in step (iii-2) is post-treated typically by pressing or calendering techniques. Other known methods are also suitable for post-treating the assembly provided in step (iii-2) which can provide for the desired thickness, density and porosity of the assembly thereby provided.

Under step (v-2) of the process for the manufacture of a positive electrode for a Lithium-Sulphur battery, the assembly provided in either step (iii-2) or (iv-2) is dried typically at a temperature of advantageously at most 60°C, preferably at a temperature comprised between 10°C and 40°C, under atmospheric pressure.

Should the disclosure of any patents, patent applications, and publications which are incorporated herein by reference conflict with the description of the present application to the extent that it may render a term unclear, the present description shall take precedence.

The invention will be now described in more detail with reference to the following examples whose purpose is merely illustrative and not limitative of the scope of the invention.

### Raw materials

Elemental Sulphur powder commercially available from Sigma Aldrich having a particle size of 100 mesh or 350 mesh.

Colloidal Sulphur powder commercially available from Sigma Aldrich having a particle size of 50-100 mesh having a Sulphur content of 80% by weight.

SUPER P® carbon black commercially available from Timcal.

FLUOROLINK® 7800 SW fluorinated surfactant of formula Cl(C₃F₆O)ₙCF₂ COONa.

PLURONIC® F-108 hydrogenated surfactant of formula 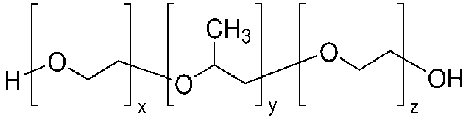 having an average number molecular weight of about 14600.

Carboxymethyl cellulose (CMC) having an average molecular weight of 700000.

### Manufacture of VDF-HFP-AA polymer aqueous latex

In a 21 It. horizontal reactor autoclave equipped with baffles and stirrer working at 40 rpm, 14 It. of deionised water were introduced, followed by 0.1 g of a 20% by weight aqueous solution of FLUOROLINK® 7800 SW sodium salt fluorinated surfactant. The pressure of 35 bar was maintained constant throughout the whole trial by feeding VDF and HFP gaseous monomers in a weight ratio of 61:39, respectively. The temperature was then brought to 85°C and 400 ml of a 37.5 g/l aqueous solution of ammonium persulphate (APS) was added over a period of 20 minutes. For the whole duration of the trial, 50 ml of a solution of acrylic acid (AA) (5% by weight acrylic acid in water) were fed every 250 g of polymer synthesized. When 5000 g of the mixture were fed, the feeding mixture was interrupted, then the pressure was let to fall down up to 11 bar while keeping the reaction temperature constant. Final reaction time was 150 minutes. The reactor was cooled to room temperature and the latex was unloaded.

The VDF-HFP-AA polymer so obtained contained 77.4% by moles of recurring units derived from VDF, 21.5% by moles of recurring units derived from HFP and 1.1% by moles of recurring units derived from acrylic acid (AA).

The aqueous latex so obtained had a solid content of 25.4% by weight.

The VDF-HFP-AA polymer was dispersed in the aqueous latex under the form of particles having an average primary size of 275 nm, as measured according to ISO 13321.

### Manufacture of VDF homopolymer aqueous latex

In a 21 It. horizontal reactor autoclave equipped with baffles and stirrer working at 40 rpm, 14 It. of deionised water were introduced, followed by 0.1 g of a 20% by weight aqueous solution of FLUOROLINK® 7800 SW sodium salt fluorinated surfactant. The pressure of 35 bar was maintained constant throughout the whole trial by feeding VDF gaseous monomer.

Then the temperature was brought to 85°C and 400 ml of a 37.5 g/l aqueous solution of ammonium persulphate (APS) were added over a period of 20 minutes. When 5000 g of the mixture were fed, the feeding mixture was interrupted, then the pressure was let to fall down up to 11 bar while keeping the reaction temperature constant. Final reaction time was 120 minutes. The reactor was cooled to room temperature, the latex was unloaded and 1000 g of a 10% by weight aqueous solution of PLURONIC ® F108 hydrogenated surfactant were added upon stirring.

The aqueous latex so obtained had a solid content of 27.6% by weight.

The VDF homopolymer was dispersed in the aqueous latex under the form of particles having an average primary size of 250 nm, as measured according to ISO 13321.

### Example 1

An electrode-forming composition was prepared by wet milling in a mortar 20.37 g of elemental Sulphur powder having a particle size of 100 mesh and 2.55 g of SUPER P® carbon black in the presence of n-hexane. A homogeneous S/C mixture was obtained after evaporation of n-hexane.

Then, 22 g of a 1.5% w/w CMC water solution, 0.41 g of a 10% w/w PLURONIC® F-108 hydrogenated surfactant water solution and 6.0 g of the S/C mixture were mixed using a DISPERMAT® stirrer. Subsequently, 1.3 g of the 25.4% w/w VDF-HFP-AA polymer aqueous latex prepared as detailed hereinabove was added to the mixture and, after an additional stirring, a homogeneous composition having a solid content of 22% w/w was obtained.

A positive electrode was prepared by tape casting of said homogeneous composition onto an aluminium foil having a thickness of 20 µm followed by drying at room temperature.

### Example 2

The same procedure as detailed under Example 1 was followed but using 16.7 g of elemental Sulphur powder having a particle size of 325 mesh and 2.09 g of SUPER P® carbon black. A homogeneous composition having a solid content of 22% w/w was obtained.

A positive electrode was prepared by tape casting of said homogeneous composition onto an aluminium foil having a thickness of 20 µm followed by drying at room temperature.

### Example 3

The same procedure as detailed under Example 2 was followed but mixing, using a DISPERMAT® stirrer, 16.76 g of a 2% w/w CMC water solution, 0.41 g of a 10% w/w PLURONIC® F-108 hydrogenated surfactant water solution and 6.0 g of the S/C mixture prepared in Example 2. Then, 1.3 g of the 25.4% w/w VDF-HFP-AA polymer aqueous latex prepared as detailed hereinabove was added to the mixture. A homogeneous composition having a solid content of 27.4% w/w was obtained.

A positive electrode was prepared by tape casting of said homogeneous composition onto an aluminium foil having a thickness of 20 µm followed by drying at room temperature.

### Comparative Example 1

An electrode-forming composition was prepared by wet milling in a mortar 8.08 g of elemental Sulphur powder having a particle size of 100 mesh and 1.01 g of SUPER P® carbon black in the presence of n-hexane. A homogeneous S/C mixture was obtained after evaporation of n-hexane.

Then, 27 g of a 4% w/w SOLEF® 5130 PVDF homopolymer in DMSO and the S/C mixture were mixed using a DISPERMAT® stirrer. A homogeneous composition having a solid content of 28% w/w was obtained.

A positive electrode was prepared by tape casting of said homogeneous composition onto an aluminium foil having a thickness of 20 µm followed by drying at 70°C.

### Comparative Example 2

An electrode-forming composition was prepared by wet milling in a mortar, using a DISPERMAT® stirrer, 24.21 g of a 2% w/w CMC water solution, 0.29 g of a 10% w/w PLURONIC® F108 hydrogenated surfactant water solution and 4.33 g of the S/C mixture prepared in Example 2. A homogeneous composition having a solid content of 16.8% w/w was obtained.

A positive electrode was prepared by tape casting of said homogeneous composition onto an aluminium foil having a thickness of 20 µm followed by drying at room temperature.

### Comparative Example 3

An electrode-forming composition was prepared by wet milling in a mortar 13.9 g of colloidal Sulphur powder and 1.74 g of SUPER P® carbon black in the presence of n-hexane. A homogeneous S/C mixture was obtained after evaporation of n-hexane. Then, 7.33 g of a 1.5% w/w CMC water solution, 0.40 g of a 10% w/w PLURONIC® F-108 hydrogenated surfactant water solution, 9.86 g of the S/C mixture and 14.9 g of water were mixed using a DISPERMAT® stirrer. Subsequently, 3.9 g of the 25.4% w/w VDF-HFP-AA polymer aqueous latex prepared as detailed hereinabove was added to the mixture and, after an additional stirring, a homogeneous composition having a solid content of 30% w/w was obtained.

The composition so obtained was processed by tape casting onto an aluminium foil having a thickness of 20 µm.

Poor adhesion of the composition so processed onto the aluminium current collector was observed.

### Comparative Example 4

An electrode-forming composition was prepared by wet milling in a mortar 4.44 g of elemental Sulphur powder having a particle size of 100 mesh and 0.56 g of SUPER P® carbon black in the presence of n-hexane. A homogeneous S/C mixture was obtained after evaporation of n-hexane.

Then, 0.35 g of a 10% w/w PLURONIC® F-108 hydrogenated surfactant water solution, 5 g of the S/C mixture and 18 g of water were mixed using a DISPERMAT® stirrer. Subsequently, 2.05 g of a 27.6% w/w VDF homopolymer aqueous latex was added to the mixture and, after an additional stirring, a homogeneous composition having a solid content of 22.1% w/w was obtained.

The composition so obtained was processed by tape casting onto an aluminium foil having a thickness of 20 µm.

Poor adhesion of the composition so processed onto the aluminium current collector was observed.

### Electrochemical measurements

Galvanostatic cycles consisting of series of charge-discharge cycles were carried out at defined electric currents between two cut-off potentials (upper and lower) in order to investigate performances of Lithium-Sulphur batteries manufactured as detailed hereinbelow.

Electrochemical measurements were performed using a multichannel potentiostat/galvanostat VMP3 (BioLogic) onto 14 mm circular specimens of the electrodes prepared according to Examples 1 to 3 and Comparative Examples 1 and 2. Charge-discharge cycling tests were conducted by using a two-electrode configuration. The electrochemical cells were CR2032 coin cells assembled in a Argon-filled glove box using the positive electrode according to any of Examples 1 to 3 and Comparative Examples 1 and 2 as working electrode, a Lithium foil as counter and reference electrode and a two glass-fiber separator filled with an electrolyte solution consisting of 1 M Lithium bis(trifluoromethylsulfonyl)imide (LiTFSI) in tetra(ethylene glycol)dimethyl ether (TEGDME)/1,3-dioxolane (DIOX) (50:50 by volume). Charge-discharge cycling tests were performed at C/5.7 charge-discharge C-rate for a maximum of 30 cycles. Cut-off voltages were 1-3 V versus Li.

The Discharge Specific Capacity [mAh/g] and the Columbic Efficiency [%] versus the number of charge-discharge cycles have been measured.

It has been found (see Table 1 here below) that the positive electrodes prepared according to the invention as notably represented by Examples 1 to 3 are particularly suitable for use in Lithium-Sulphur batteries as compared with positive electrodes generally known in the art as notably represented by Comparative Examples 1 and 2.

**Table 1**

| **Run** | | **Ex. 1** | **Ex. 2** | **Ex. 3** | **C. Ex. 1** | **C. Ex. 2** |
|---|---|---|---|---|---|---|
| **Discharge Specific Capacity [mAh/g]** | Cycle 1 | 579 | 606 | 598 | 546 | 605 |
| | Cycle 5 | 322 | 320 | 319 | 316 | 345 |
| | Cycle 10 | 302 | 289 | 294 | 286 | 298 |
| | Cycle 15 | 280 | 261 | 286 | 267 | 240 |
| | Cycle 20 | 257 | 244 | 274 | 257 | - |
| | Cycle 25 | 240 | 229 | 254 | - | - |
| | Cycle 30 | 227 | 217 | 236 | - | - |
| **Columbic Efficiency [%]** | Cycle 1 | 113 | 115 | 134 | 113 | 107 |
| | Cycle 5 | 85 | 86 | 101 | 85 | 78 |
| | Cycle 10 | 82 | 84 | 99 | 83 | 68 |
| | Cycle 15 | 81 | 83 | 100 | 83 | 61 |
| | Cycle 20 | 80 | 83 | 98 | 81 | - |
| | Cycle 25 | 79 | 84 | 97 | - | - |
| | Cycle 30 | 80 | 85 | 97 | - | - |

## Claims

1. An electrode-forming composition [composition (C)] comprising:
(a) an aqueous latex comprising at least one fluoropolymer [polymer (F)] comprising recurring units derived from vinylidene fluoride (VDF), at least one (meth)acrylic monomer [monomer (MA)] complying with formula (II) here below: 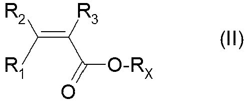 wherein:
- R₁, R₂ and R₃, equal to or different from each other, are independently selected from a hydrogen atom and a C₁-C₃ hydrocarbon group, and
- Rx is a hydrogen atom or a C₁-C₅ hydrocarbon moiety comprising at least one hydroxyl group, and, optionally, at least one other fluorinated monomer [monomer (F)] different from VDF, and,
homogeneously dispersed therein,
(b) at least one powdery electrode-forming material consisting of elemental Sulphur [material (E)],
(c) at least one powdery electrically conducting material [material (C)],
(d) optionally, at least one surfactant [surfactant (S)],
(e) optionally, at least one binding agent [agent (B)], and
(f) optionally, less than 10% by weight, based on the total weight of the composition (C), of at least one organic solvent [solvent (S)],
wherein the polymer (F) in the aqueous latex is under the form of primary particles having an average primary particle size of less than 1 µm, as measured according to ISO 13321.

2. The composition (C) according to claim 1, said composition (C) being free from any organic solvent [solvent (S)].

3. The composition (C) according to claim 1 or 2, said composition (C) being free from any organic solvent [solvent (S)] selected from the group consisting of N-methyl-2-pyrrolidone (NMP), N,N-dimethylformamide (DMF) and N,N-dimethylacetamide (DMAC).

4. The composition (C) according to any one of claims 1 to 3, said composition (C) comprising:
(a) an aqueous latex comprising at least one fluoropolymer [polymer (F)] comprising recurring units derived from vinylidene fluoride (VDF), at least one monomer (MA) and, optionally, at least one other fluorinated monomer [monomer (F)] different from VDF, and,
homogeneously dispersed therein,
(b) at least one powdery electrode-forming material consisting of elemental Sulphur [material (E)],
(c) at least one powdery electrically conducting material [material (C)],
(d) at least one surfactant [surfactant (S)], and
(e) optionally, at least one binding agent [agent (B)],
wherein the polymer (F) in the aqueous latex is under the form of primary particles having an average primary particle size of less than 1 µm, as measured according to ISO 13321.

5. The composition (C) according to any one of claims 1 to 4, said composition (C) comprising:
(a) from 1% to 20% by weight, preferably from 3% to 15% by weight of an aqueous latex comprising at least one fluoropolymer [polymer (F)] comprising recurring units derived from vinylidene fluoride (VDF), at least one monomer (MA) and, optionally, at least one other fluorinated monomer [monomer (F)] different from VDF, and,
homogeneously dispersed therein,
(b) from 40% to 95% by weight, preferably from 60% to 90% by weight of at least one powdery electrode-forming material consisting of elemental Sulphur [material (E)],
(c) from 3% to 60% by weight, preferably from 5% to 40% by weight of at least one powdery electrically conducting material [material (C)],
(d) from 0.1% to 20% by weight, preferably from 0.2% to 10% by weight of at least one surfactant [surfactant (S)], and
(e) optionally, from 0.1% to 20% by weight, preferably from 0.2% to 10% by weight of at least one binding agent [agent (B)],
wherein the polymer (F) in the aqueous latex is under the form of primary particles having an average primary particle size of less than 1 µm, as measured according to ISO 13321.

6. The composition (C) according to any one of claims 1 to 5, wherein the aqueous latex is obtainable by aqueous emulsion polymerization, typically in an aqueous medium, of vinylidene fluoride (VDF), at least one monomer (MA) and, optionally, at least one other fluorinated monomer [monomer (F)] different from VDF.

7. The composition (C) according to claim 6, wherein the aqueous emulsion polymerization is carried out in the presence of:
- at least one surfactant [surfactant (S)],
- at least one radical initiator,
- optionally, at least one non-functional perfluoropolyether (PFPE) oil, and
- optionally, at least one chain transfer agent.

8. The composition (C) according to any one of claims 1 to 7, wherein the material (E) is selected from the group consisting of cyclic octasulphur (S₈) and its cyclic S₁₂ allotrope.

9. The composition (C) according to any one of claims 1 to 8, wherein the material (C) is selected from the group consisting of:
- carbon-based materials such as carbon, carbon black, acetylene black and furnace black,
- metal powders of Ni, Co, Cu, Pt, Ag, Au and alloys thereof, and
- polymers selected from the group consisting of polyaniline, polythiophene, polyacetylene, polypyrrole and mixtures thereof.

10. A process for the manufacture of an electrode-forming composition [composition (C)], said process comprising the following steps:
(i-1) providing an aqueous latex comprising at least one fluoropolymer [polymer (F)] comprising recurring units derived from vinylidene fluoride (VDF), at least one (meth)acrylic monomer [monomer (MA)] complying with formula (II) here below: 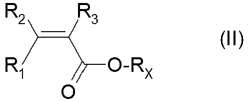 wherein:
- R₁, R₂ and R₃, equal to or different from each other, are independently selected from a hydrogen atom and a C₁-C₃ hydrocarbon group, and
- Rx is a hydrogen atom or a C₁-C₅ hydrocarbon moiety comprising at least one hydroxyl group, and, optionally, at least one other fluorinated monomer [monomer (F)] different from VDF, wherein the polymer (F) in the aqueous latex is under the form of primary particles having an average primary particle size of less than 1 µm, as measured according to ISO 13321;
(ii-1) providing a mixture comprising:
- at least one powdery electrode-forming material consisting of elemental Sulphur [material (E)], and
- at least one powdery electrically conducting material [material (C)];
(iii-1) grinding the mixture provided in step (ii-1),
(iv-1) contacting the aqueous latex provided in step (i-1) with the following components:
- the grinded mixture provided in step (iii-1),
- optionally, at least one surfactant [surfactant (S)],
- optionally, at least one binding agent [agent (B)], and
- optionally, less than 10% by weight, based on the total weight of the composition (C), of at least one organic solvent [solvent (S)].

11. A process for the manufacture of a positive electrode for a Lithium-Sulphur battery, said process comprising the following steps:
(i-2) providing a composition (C) according to any one of claims 1 to 9,
(ii-2) providing a metal substrate,
(iii-2) applying said composition (C) onto at least one surface of said metal substrate thereby providing an assembly comprising at least one layer made of said composition (C) adhered onto at least one surface of said metal substrate,
(iv-2) optionally, post-treating the assembly provided in step (iii-2), and
(v-2) drying the assembly provided in either step (iii-2) or (iv-2).

12. The process according to claim 11, wherein under step (iv-2) the assembly provided in step (iii-2) is post-treated by pressing or calendering techniques.

13. The process according to claim 11 or 12, wherein under step (v-2) the assembly provided in either step (iii-2) or (iv-2) is dried at a temperature of at most 60°C, preferably at a temperature comprised between 10°C and 40°C, under atmospheric pressure.

14. A process for the manufacture of a Lithium-Sulphur battery, said process comprising manufacturing a positive electrode according to any one of claims 11 to 13.

## Patentansprüche

1. Elektrodenbildende Zusammensetzung [Zusammensetzung (C)], umfassend:
(a) einen wässrigen Latex, der mindestens ein Fluorpolymer [Polymer (F)] umfasst, das sich wiederholende Einheiten umfasst, die abgeleitet sind von Vinylidenfluorid (VDF), mindestens einem (Meth)acrylmonomer [Monomer (MA)], das der folgenden Formel (II) entspricht : 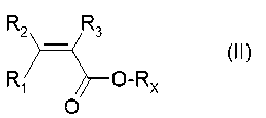 wobei:
- R₁, R₂ und R₃ gleich oder unterschiedlich sein können und unabhängig ausgewählt sind aus einem Wasserstoffatom und einer C₁-C₃-Kohlenwasserstoffgruppe, und
- Rₓ ein Wasserstoffatom oder ein C₁-C₅-Kohlenwasserstoffanteil ist, der mindestens eine Hydroxylgruppe umfasst,
und gegebenenfalls mindestens einem anderen fluorierten Monomer [Monomer (F)], das von VDF verschieden ist, und,
darin homogen dispergiert,
(b) mindestens ein pulveriges elektrodenbildendes Material, bestehend aus elementarem Schwefel [Material (E)],
(c) mindestens ein pulveriges, elektrisch leitendes Material [Material (C)],
(d) gegebenenfalls mindestens ein Tensid [Tensid (S)],
(e) gegebenenfalls mindestens ein Bindemittel [Mittel (B)], und
(f) gegebenenfalls weniger als 10 Gew.%, basierend auf dem Gesamtgewicht der Zusammensetzung (C), von mindestens einem organischen Lösungsmittel [Lösungsmittel (S)],
wobei das Polymer (F) in dem wässrigen Latex in Form von Primärpartikeln mit einer durchschnittlichen Primärpartikelgröße von weniger als 1 µm vorliegt, gemessen gemäß ISO 13321.

2. Zusammensetzung (C) nach Anspruch 1, wobei die Zusammensetzung (C) frei von jedwedem organischen Lösungsmittel [Lösungsmittel (S)] ist.

3. Zusammensetzung (C) nach Anspruch 1 oder 2, wobei die Zusammensetzung (C) frei von jedwedem organischen Lösungsmittel [Lösungsmittel (S)] ausgewählt aus der Gruppe bestehend aus N-Methyl-2-pyrrolidon (NMP), N,N-Dimethylformamid (DMF) und N,N-Dimethylacetamid (DMAC) ist.

4. Zusammensetzung (C) nach einem der Ansprüche 1 bis 3, wobei die Zusammensetzung (C) umfasst :
(a) einen wässrigen Latex, umfassend mindestens ein Fluorpolymer [Polymer (F)], umfassend sich wiederholende Einheiten, die abgeleitet sind von Vinylidenfluorid (VDF), mindestens einem Monomer (MA) und gegebenenfalls mindestens einem anderen fluorierten Monomer [Monomer (F)], das von VDF verschieden ist, und,
darin homogen dispergiert,
(b) mindestens ein pulveriges elektrodenbildendes Material, bestehend aus elementarem Schwefel [Material (E)],
(c) mindestens ein pulveriges, elektrisch leitendes Material [Material (C)],
(d) mindestens ein Tensid [Tensid (S)] und
(e) gegebenenfalls mindestens ein Bindemittel [Mittel (B)],
wobei das Polymer (F) in dem wässrigen Latex in Form von Primärpartikeln mit einer durchschnittlichen Primärpartikelgröße von weniger als 1 µm vorliegt, gemessen gemäß ISO 13321.

5. Zusammensetzung (C) nach einem der Ansprüche 1 bis 4, wobei die Zusammensetzung (C) umfasst :
(a) 1 Gew.% bis 20 Gew.%, vorzugsweise 3 Gew.% bis 15 Gew.% eines wässrigen Latex, umfassend mindestens ein Fluorpolymer [Polymer (F)], umfassend sich wiederholende Einheiten, die abgeleitet sind von Vinylidenfluorid (VDF), mindestens einem Monomer (MA) und gegebenenfalls mindestens einem anderen fluorierten Monomer [Monomer (F)], das von VDF verschieden ist, und,
darin homogen dispergiert,
(b) 40 Gew.% bis 95 Gew.%, vorzugsweise 60 Gew.% bis 90 Gew.% von mindestens einem pulverigen elektrodenbildenden Material bestehend aus elementarem Schwefel [Material (E)],
(c) 3 Gew.% bis 60 Gew.%, vorzugsweise 5 Gew.% bis 40 Gew.% von mindestens einem pulverigen, elektrisch leitenden Material [Material (C)],
(d) 0,1 Gew.% bis 20 Gew.%, vorzugsweise 0,2 Gew.% bis 10 Gew.% von mindestens einem Tensid [Tensid (S)], und
(e) gegebenenfalls 0,1 Gew.% bis 20 Gew.%, vorzugsweise 0,2 Gew.% bis 10 Gew.% von mindestens einem Bindemittel [Mittel (B)],
wobei das Polymer (F) in dem wässrigen Latex in Form von Primärpartikeln mit einer durchschnittlichen Primärpartikelgröße von weniger als 1 µm vorliegt, gemessen gemäß ISO 13321.

6. Zusammensetzung (C) nach einem der Ansprüche 1 bis 5, wobei der wässrige Latex durch wässrige Emulsionspolymerisation, typischerweise in einem wässrigen Medium, von Vinylidenfluorid (VDF), mindestens einem Monomer (MA) und gegebenenfalls mindestens einem anderen fluorierten Monomer [Monomer (F)], das von VDF verschieden ist, erhältlich ist.

7. Zusammensetzung (C) nach Anspruch 6, wobei die wässrige Emulsionspolymerisation in Gegenwart von :
- mindestens einem Tensid [Tensid (S)],
- mindestens einem Radikalinitiator,
- gegebenenfalls mindestens einem nichtfunktionalen Perfluorpolyether-(PFPE)-Öl, und
- gegebenenfalls mindestens einem Kettenübertragungsmittel durchgeführt wird.

8. Zusammensetzung (C) nach einem der Ansprüche 1 bis 7, wobei das Material (E) ausgewählt ist aus der Gruppe bestehend aus cyclischem Octaschwefel (S₈) und seinem cyclischen S₁₂-Allotrop.

9. Zusammensetzung (C) nach einem der Ansprüche 1 bis 8, wobei das Material (C) ausgewählt ist aus der Gruppe bestehend aus :
- Materialien auf Kohlebasis, wie Kohle, Ruß, Acetylenruß und Ofenruß,
- Metallpulvern von Ni, Co, Cu, Pt, Ag, Au und Legierungen davon, und
- Polymeren ausgewählt aus der Gruppe bestehend aus Polyanilin, Polythiophen, Polyacetylen, Polypyrrol und Mischungen davon.

10. Verfahren zur Herstellung einer elektrodenbildenden Zusammensetzung [Zusammensetzung (C)], wobei das Verfahren die folgenden Schritte umfasst:
(i-1) Bereitstellen eines wässrigen Latex, der mindestens ein Fluorpolymer [Polymer (F)] umfasst, das sich wiederholende Einheiten umfasst, die abgeleitet sind von Vinylidenfluorid (VDF), mindestens einem (Meth)acrylmonomer [Monomer (MA)], das der folgenden Formel (II) entspricht : 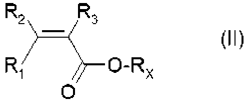 wobei:
- R₁, R₂ und R₃ gleich oder unterschiedlich sein können und unabhängig ausgewählt sind aus einem Wasserstoffatom und einer C₁-C₃-Kohlenwasserstoffgruppe, und
- Rₓ ein Wasserstoffatom oder ein C₁-C₅-Kohlenwasserstoffanteil ist, der mindestens eine Hydroxylgruppe umfasst,
und gegebenenfalls mindestens einem anderen fluorierten Monomer [Monomer (F)], das von VDF verschieden ist, wobei das Polymer (F) in dem wässrigen Latex in Form von Primärpartikeln mit einer durchschnittlichen Primärpartikelgröße von weniger als 1 µm vorliegt, gemessen gemäß ISO 13321;
(ii-1) Bereitstellen einer Mischung, umfassend :
- mindestens ein pulveriges elektrodenbildendes Material, bestehend aus elementarem Schwefel [Material (E)], und
- mindestens ein pulveriges, elektrisch leitendes Material [Material (C)];
(iii-1)Mahlen der in Schritt (ii-1) bereitgestellten Mischung,
(iv-1)Kontaktieren des in Schritt (i-1) bereitgestellten wässrigen Latex mit den folgenden Komponenten :
- der in Schritt (iii-1) bereitgestellten gemahlenen Mischung;
- gegebenenfalls mindestens einem Tensid [Tensid (S)];
- gegebenenfalls mindestens einem Bindemittel [Mittel (B)], und
- gegebenenfalls weniger als 10 Gew.%, basierend auf dem Gesamtgewicht der Zusammensetzung (C), von mindestens einem organischen Lösungsmittel [Lösungsmittel (S)].

11. Verfahren zur Herstellung einer positiven Elektrode für eine Lithium-Schwefel-Batterie, wobei das Verfahren die folgenden Schritte umfasst:
(i-2) Bereitstellen einer Zusammensetzung (C) gemäß einem der Ansprüche 1 bis 9,
(ii-2) Bereitstellen eines Metallsubstrats,
(iii-2) Aufbringen der Zusammensetzung (C) auf mindestens eine Oberfläche des Metallsubstrats, wodurch eine Anordnung bereitgestellt wird, die mindestens eine aus der Zusammensetzung (C) hergestellte Schicht umfasst, die an mindestens einer Oberfläche des Metallsubstrats haftet,
(iv-2) gegebenenfalls Nachbehandeln der in Schritt (iii-2) bereitgestellten Anordnung, und
(v-2) Trocknen der in Schritt (iii-2) oder (iv-2) bereitgestellten Anordnung.

12. Verfahren nach Anspruch 11, wobei in Schritt (iv-2) die in Schritt (iii-2) bereitgestellte Anordnung durch Press- oder Kalandriertechniken nachbehandelt wird.

13. Verfahren nach Anspruch 11 oder 12, wobei in Schritt (v-2) die in Schritt (iii-2) oder (iv-2) bereitgestellte Anordnung bei einer Temperatur von höchstens 60 °C, vorzugsweise bei einer Temperatur zwischen 10 °C und 40 °C unter atmosphärischem Druck getrocknet wird.

14. Verfahren zur Fertigung einer Lithium-Schwefel-Batterie, wobei das Verfahren Fertigen einer positiven Elektrode gemäß einem der Ansprüche 11 bis 13 umfasst.

## Revendications

1. Composition de formation d'électrode [composition (C)] comprenant :
(a) un latex aqueux comprenant au moins un polymère fluoré [polymère (F)] comprenant des motifs récurrents dérivés de fluorure de vinylidène (VDF), d'au moins un monomère (méth)acrylique [monomère (MA)] répondant à la formule (II) ci-dessous : 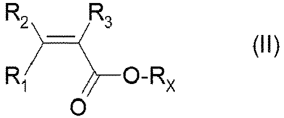 où :
- R₁, R₂ et R₃, identiques les uns aux autres ou différents les uns des autres, sont chacun indépendamment choisis entre un atome d'hydrogène et un groupe hydrocarboné en C₁-C₃ et
- R_{X} est un atome d'hydrogène ou une fraction hydrocarbonée en C₁-C₅ comprenant au moins un groupe hydroxyle,
et, éventuellement, d'au moins un autre monomère fluoré [monomère (F)] différent du VDF et,
dispersés de façon homogène dans celui-ci,
(b) au moins une matière de formation d'électrode pulvérulente constituée de soufre élémentaire [matière (E)],
(c) au moins une matière électriquement conductrice pulvérulente [matière (C)],
(d) éventuellement, au moins un tensioactif [tensioactif (S)],
(e) éventuellement, au moins un agent liant [agent (B)] et
(f) éventuellement, moins de 10 % en poids, par rapport au poids total de la composition (C), d'au moins un solvant organique [solvant (S)],
le polymère (F) dans le latex aqueux étant sous la forme de particules primaires ayant une taille moyenne de particule primaire, telle que mesurée selon la méthode ISO 13321, inférieure à 1 µm.

2. Composition (C) selon la revendication 1, ladite composition (C) étant exempte d'un quelconque solvant organique [solvant (S)].

3. Composition (C) selon la revendication 1 ou 2, ladite composition (C) étant exempte d'un quelconque solvant organique [solvant (S)] choisi dans le groupe constitué par la *N*-méthyl-2-pyrrolidone (NMP), le *N*,*N*-diméthylformamide (DMF) et le *N*,*N*-diméthylacétamide (DMAC).

4. Composition (C) selon l'une quelconque des revendications 1 à 3, ladite composition (C) comprenant :
(a) un latex aqueux comprenant au moins un polymère fluoré [polymère (F)] comprenant des motifs récurrents dérivés de fluorure de vinylidène (VDF), d'au moins un monomère (MA) et, éventuellement, d'au moins un autre monomère fluoré [monomère (F)] différent du VDF et,
dispersés de façon homogène dans celui-ci,
(b) au moins une matière de formation d'électrode pulvérulente constituée de soufre élémentaire [matière (E)],
(c) au moins une matière électriquement conductrice pulvérulente [matière (C)],
(d) au moins un tensioactif [tensioactif (S)] et
(e) éventuellement, au moins un agent liant [agent (B)],
le polymère (F) dans le latex aqueux étant sous la forme de particules primaires ayant une taille moyenne de particule primaire, telle que mesurée selon la méthode ISO 13321, inférieure à 1 µm.

5. Composition (C) selon l'une quelconque des revendications 1 à 4, ladite composition (C) comprenant :
(a) de 1 % à 20 % en poids, de préférence de 3 % à 15 % en poids d'un latex aqueux comprenant au moins un polymère fluoré [polymère (F)] comprenant des motifs récurrents dérivés de fluorure de vinylidène (VDF), d'au moins un monomère (MA) et, éventuellement, d'au moins un autre monomère fluoré [monomère (F)] différent du VDF et,
dispersés de façon homogène dans celui-ci,
(b) de 40 % à 95 % en poids, de préférence de 60 % à 90 % en poids d'au moins une matière de formation d'électrode pulvérulente constituée de soufre élémentaire [matière (E)],
(c) de 3 % à 60 % en poids, de préférence de 5 % à 40 % en poids d'au moins une matière électriquement conductrice pulvérulente [matière (C)],
(d) de 0,1 % à 20 % en poids, de préférence de 0,2 % à 10 % en poids d'au moins un tensioactif [tensioactif (S)] et
(e) éventuellement, de 0,1 % à 20 % en poids, de préférence de 0,2 % à 10 % en poids d'au moins un agent liant [agent (B)],
le polymère (F) dans le latex aqueux étant sous la forme de particules primaires ayant une taille moyenne de particule primaire, telle que mesurée selon la méthode ISO 13321, inférieure à 1 µm.

6. Composition (C) selon l'une quelconque des revendications 1 à 5, le latex aqueux pouvant être obtenu par polymérisation en émulsion aqueuse, d'ordinaire dans un milieu aqueux, de fluorure de vinylidène (VDF), d'au moins un monomère (MA) et, éventuellement, d'au moins un autre monomère fluoré [monomère (F)] différent du VDF.

7. Composition (C) selon la revendication 6, la polymérisation en émulsion aqueuse étant effectuée en présence de :
- au moins tensioactif [tensioactif (S)],
- au moins un amorceur radicalaire,
- éventuellement, au moins une huile de polyéther perfluoré (PFPE) non fonctionnel et
- éventuellement, au moins un agent de transfert de chaîne.

8. Composition (C) selon l'une quelconque des revendications 1 à 7, la matière (E) étant choisie dans le groupe constitué par l'octasoufre cyclique (S₈) et son allotrope S₁₂ cyclique.

9. Composition (C) selon l'une quelconque des revendications 1 à 8, la matière (C) étant choisie dans le groupe constitué par :
- les matières à base de carbone telles que le carbone, le noir de carbone, le noir d'acétylène et le noir de fourneau,
- les poudres métalliques de Ni, Co, Cu, Pt, Ag, Au et d'alliages de ceux-ci et
- les polymères choisis dans le groupe constitué par la polyaniline, le polythiophène, le polyacétylène, le polypyrrole et les mélanges de ceux-ci.

10. Procédé pour la fabrication d'une composition de formation d'électrode [composition (C)], ledit procédé comprenant les étapes suivantes :
(i-1) la fourniture d'un latex aqueux comprenant au moins un polymère fluoré [polymère (F)] comprenant des motifs récurrents dérivés de fluorure de vinylidène (VDF), d'au moins un monomère (méth)acrylique [monomère (MA)] répondant à la formule (II) ci-dessous : 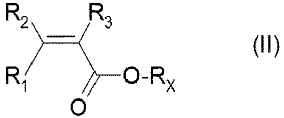 où :
- R₁, R₂ et R₃, identiques les uns aux autres ou différents les uns des autres, sont chacun indépendamment choisis entre un atome d'hydrogène et un groupe hydrocarboné en C₁-C₃ et
- R_{X} est un atome d'hydrogène ou une fraction hydrocarbonée en C₁-C₅ comprenant au moins un groupe hydroxyle,
et, éventuellement, d'au moins un autre monomère fluoré [monomère (F)] différent du VDF,
le polymère (F) dans le latex aqueux étant sous la forme de particules primaires ayant une taille moyenne de particule primaire, telle que mesurée selon la méthode ISO 13321, inférieure à 1 µm ;
(ii-1) la fourniture d'un mélange comprenant :
- au moins une matière de formation d'électrode pulvérulente constituée de soufre élémentaire [matière (E)] et
- au moins une matière électriquement conductrice pulvérulente [matière (C)] ;
(iii-1) le broyage du mélange fourni dans l'étape (ii-1),
(iv-1) la mise en contact du latex aqueux fourni dans l'étape (i-1) avec les constituants suivants :
- le mélange broyé fourni dans l'étape (iii-1),
- éventuellement, au moins un tensioactif [tensioactif (S)],
- éventuellement, au moins un agent liant [agent (B)] et
- éventuellement, moins de 10 % en poids, par rapport au poids total de la composition (C), d'au moins un solvant organique [solvant (S)].

11. Procédé pour la fabrication d'une électrode positive pour une batterie au lithium-soufre, ledit procédé comprenant les étapes suivantes :
(i-2) la fourniture d'une composition (C) selon l'une quelconque des revendications 1 à 9,
(ii-2) la fourniture d'un substrat métallique,
(iii-2) l'application de ladite composition (C) sur au moins une surface dudit substrat métallique pour de cette manière fournir un ensemble comprenant au moins une couche constituée de ladite composition (C) collée sur au moins une surface dudit substrat métallique,
(iv-2) éventuellement, le post-traitement de l'ensemble fourni dans l'étape (iii-2) et
(v-2) le séchage de l'ensemble fourni dans l'une ou l'autre de l'étape (iii-2) ou de l'étape (iv-2).

12. Procédé selon la revendication 11, dans lequel dans l'étape (iv-2) l'ensemble fourni dans l'étape (iii-2) est post-traité par des techniques de pressage ou de calandrage.

13. Procédé selon la revendication 11 ou 12, dans lequel dans l'étape (v-2) l'ensemble fourni dans l'une ou l'autre de l'étape (iii-2) ou de l'étape (iv-2) est séché à une température d'au maximum 60 °C, de préférence à une température comprise entre 10 °C et 40 °C, sous pression atmosphérique.

14. Procédé pour la fabrication d'une batterie au lithium-soufre, ledit procédé comprenant la fabrication d'une électrode positive selon l'une quelconque des revendications 11 à 13.
